# EUROPEAN PATENT APPLICATION

(11) **EP 2 530 996 A1**
(43) Date of publication of application: **05.12.2012**
(21) Application number: 12170079.3
(22) Date of filing: 30.05.2012
(51) Int. Cl.: H04W 88/08

(54) **Network connection device, method of setting an operation mode, and computer program product**

(30) Priority: 31.05.2011 JP 2011121235
(71) Applicant: Buffalo Inc., Aichi 460-8315 (JP)
(72) Inventor: Yamada, Daisuke, Nagoya-shi, Aichi 460-8315 (JP)
(74) Representative: Taylor, Adam David

(57) **Abstract**

A network connection device (100; 100a; 100b; 100c) that identifies a position of the network connection device and acquires position-related information related to the identified position; sets one operation mode among a plurality of operation modes respectively having different network connecting functions as an operation mode of the network connection device based on the acquired position-related information; and executes wireless data communication in the set operation mode.

## Description

### BACKGROUND

### Technical Field

This disclosure relates to setting an operation mode in a network connection device.

### Related Art

A wireless LAN access point (hereinafter also called "access point") is widely used as a network connection device to connect a wireless LAN client (hereinafter also called "client"), such as a personal computer or a game machine, to a network in home or office.

With recent size reduction of the access point, its point of use is not stationary. Especially, portable network connection devices with simple power supply, such as battery, have been proposed. Some of these network connection devices have been proposed to have wireless communication functions via a mobile communication network, such as 3G/HPSA (High Speed Packet Access) line, in addition to the access point functions. Such network connection devices allow the user even outside the home to connect a client to a wide area network, such as the Internet.

When the network connection device in used in home or office, it may be undesirable to use the network connection device as a router, since a router device, for example, a home gateway provided by an ISP (Internet Service Provider), is often located in the home or office. When the network connection device is also used as the router, there are two routers to access the Internet in the home or office. In such cases, the client may misidentify the default gateway, resulting in failed data transmission via the Internet. There may accordingly be a general need to use the network connection device as the bridge in the home or office.

When the network connection device is used outdoors or in a public wireless LAN connection area, however, there is a need to use the network connection device as the router. In the outdoors, there may be a demand to connect a plurality of clients to the Internet. In this case, the user is only required to subscribe to the Internet connection service provided by the ISP provider for the network connection device. The user can connect the plurality of clients to the Internet by simply making the network connection device serve as the router.

No sufficient method or system has, however, been proposed so far to adequately set or change over the operation mode of the network connection device between the operation mode as the bridge and the operation mode as the router.

### SUMMARY

According to a first aspect of the present invention, there is provided a network connection device that identifies a position of the network connection device and acquires position-related information related to the identified position; sets one operation mode among a plurality of operation modes respectively having different network connecting functions as an operation mode of the network connection device based on the acquired position-related information; and executes wireless data communication in the set operation mode.

According to another aspect of the present invention, there is provided a method of setting an operation mode in a network connection device for communication with each of a plurality of access points. The method includes identifying a position of the network connection device, acquiring position-related information related to the identified position; and setting the operation of the network connection device to either a first operation mode, in which the network connection device serves as a bridge, or a second operation mode, in which the network connection device serves as a router, based on the acquired position-related information.

According to another aspect of the present invention, there is provided a non-transitory computer readable storage medium including computer readable instructions, which when executed by a network connection device, cause the network connection device to perform a method of setting an operation mode for communication with each of a plurality of access points. The method includes identifying a position of the network connection device, acquiring position-related information related to the identified position; and setting the operation of the network connection device to either a first operation mode, in which the network connection device serves as a bridge, or a second operation mode, in which the network connection device serves as a router, based on the acquired position-related information.

### BRIEF DESCRIPTION OF THE DRAWINGS

Fig. 1 is a block diagram illustrating the structure of a network connection device 100 according to one embodiment of the disclosure;
Fig. 2 illustrates the first connection configuration with the portable network connection device 100;
Fig. 3 schematically illustrates the data flow in the portable network connection device 100 according to the first connection configuration shown in Fig. 2;
Fig. 4 illustrates the second connection configuration with the portable network connection device 100;
Fig. 5 schematically illustrates the data flow in the portable network connection device 100 according to the second connection configuration shown in Fig. 4;
Fig. 6 illustrates the third connection configuration with the portable network connection device 100;
Fig. 7 schematically illustrates the data flow in the portable network connection device 100 according to the third connection configuration shown in Fig. 6;
Fig. 8 illustrates one example of the settings of the service providing point table RT1 stored in the ROM 171 of the portable network connection device 100;
Fig. 9 illustrates one example of the settings of the operation mode specification table RT2;
Fig. 10 is a flowchart showing the procedure of operation mode changeover process according to the first embodiment;
Fig. 11 shows the relative positions of the portable network connection device 100, the home gateway 500 shown in Fig. 2, the public wireless LAN access point 600 shown in Fig. 4, the mobile communication network access point 700 shown in Fig. 6, and a wireless router 610;
Fig. 12 is a block diagram illustrating the structure of a portable network connection device 100a according to a second embodiment;
Fig. 13 is a flowchart showing the procedure of operation mode changeover process according to the second embodiment;
Fig. 14 is a block diagram illustrating the structure of a portable network connection device 100b according to a third embodiment;
Fig. 15 illustrates one example of the settings of the operation mode specification table RT5 shown in Fig. 14;
Fig. 16 is a flowchart showing the procedure of operation mode changeover process according to the third embodiment;
Fig. 17 is a block diagram illustrating the structure of a portable network connection device 100c according to a fourth embodiment;
Fig. 18 is a flowchart showing the procedure of operation mode changeover process according to the fourth embodiment; and
Fig. 19 schematically illustrates one example of estimating the future position of the portable network connection device 100c at step S28.

### DESCRIPTION OF EMBODIMENTS

### A. First Embodiment

### A1. System Configuration

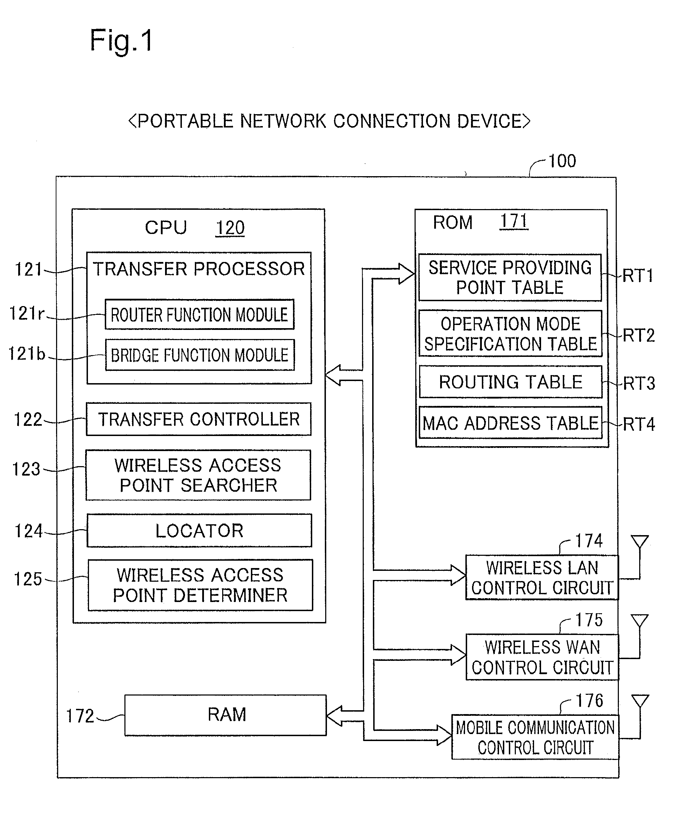

Fig. 1 is a block diagram illustrating the structure of a network connection device 100 according to one embodiment of the invention. This network connection device 100 may be powered by a battery and is man-portable due to its small and lightweight body. Hereinafter, such a network connection device of the embodiment is specifically called "portable network connection device". The portable network connection device 100 includes a wireless LAN (Local Area Network) control circuit 174, a wireless WAN (Wide Area Network) control circuit 175, a mobile communication control circuit 176, a CPU (Central Processing Unit) 120, a ROM (Read Only Memory) 171 and a RAM (Random Access Memory) 172. The portable network connection device 100 serves to connect a wireless LAN client (hereinafter also called "client"), such as a personal computer or a game machine, to an upper-layer network or wide area network, such as the Internet, or a wireless LAN.

The wireless LAN control circuit (also called "wireless LAN interface") 174 includes a modulator, an amplifier and an antenna and serves as a wireless LAN access point conforming to, for example, the IEEE 802.11 a/b/g/n standard to establish wireless communication with a wireless LAN client (e.g., personal computer or game machine). The wireless WAN control circuit (also called "wireless WAN interface") 175 includes a modulator, an amplifier and an antenna and serves as a wireless LAN client conforming to, for example, the IEEE 802.11 a/b/g/n standard to establish wireless communication with a wireless LAN access point (e.g., public wireless LAN access point). The mobile communication control circuit 176 includes a modulator, an amplifier and an antenna and serves as a station of a mobile communication network conforming to, for example, 3G/HSPA protocol to establish wireless communication with an access point of the mobile communication network. As described, the portable network connection device 100 according to the first embodiment includes a plurality of wireless communication interfaces making wireless communication in a plurality of different wireless communication networks.

The ROM 171 stores in advance an application program for packet forwarding and an application program for setting an operation mode of a transfer processor 121. The CPU 120 executes these application programs to serve as the transfer processor 121, a transfer controller 122, a wireless access point searcher 123, a locator 124 and a wireless access point determiner 125. The program codes stored in the ROM 171 may be directly executed as the application program, or the application program may be forwarded to the RAM 172 to be executed.

The transfer processor 121 has a router function module 121r and a bridge function module 121b and serves to forward packets (layer 3 packets and layer 2 frames, where layer 2 and layer 3 refer to the second and third layers of the OSI reference model) received via each of the wireless communication interfaces (wireless LAN control circuit 174, wireless WAN control circuit 175 and mobile communication control circuit 176) according to a destination address. The transfer processor 121 has a first operation mode, in which only the bridge function module 121b performs processing, and a second operation mode, in which both the bridge function module 121b and the router function module 121r perform processing, as available operation modes for packet forwarding. In the first operation mode, only the bridge function module 121b serves to forward layer 2 frames, so that the portable network connection device 100 works as the bridge device as a whole. In the second operation mode, on the other hand, both the bridge function module 121b and the router function module 121r r perform processing, so that the portable network connection device 100 works as the router device as a whole.

The transfer controller 122 controls the transfer processor 121. The transfer controller 122 performs an operation mode changeover process (described later) as one of such controls to set the operation mode of the transfer processor 121 and change over the existing settings as appropriate.

The wireless access point searcher 123 receives a signal output from a wireless access point to search for the wireless access point in the operation mode changeover process described later. According to this embodiment, the term "wireless access point" is used in the wider sense including both the wireless LAN access point of the wireless LAN and the access point or base station of the wireless communication network (hereinafter called "wireless communication network access point").

The locator 124 serves to identify information on the position of the portable network connection device 100 in the operation mode changeover process described later. According to this embodiment, the locator 124 identifies the current position as the information on the position of the portable network connection device 100. The wireless access point determiner 125 determines the wireless access point to be used for connecting the portable network connection device 100 with the upper-layer network, such as the Internet, in the operation mode changeover process described later.

The ROM 171 may be a flash ROM and stores a service providing point table RT1, an operation mode specification table RT2, a routing table RT3 and a MAC address table RT4, in addition to the application programs explained above. The service providing point table RT1 and the operation mode specification table RT2 are referred to in the operation mode changeover process described later. The details of these tables RT1 and RT2 are described later. The router table RT3 has the settings for the forwarding path of packets (layer 3 packets) and is referred to by the transfer controller 122 when the portable network connection device 100 works as the router. The MAC address table RT4 has the settings for the forwarding path of packets (layer 2 frames) and is referred to by the transfer controller 122 when the portable network connection device 100 works as the bridge.

The portable network connection device 100 allows a plurality of connection configurations, i.e., first to third connection configurations, as the available connection configurations for connection with the client and the upper-layer network. The first to the third connection configurations are sequentially described in detail below. These connection configurations may have different operation modes with the same portable network connection device 100.

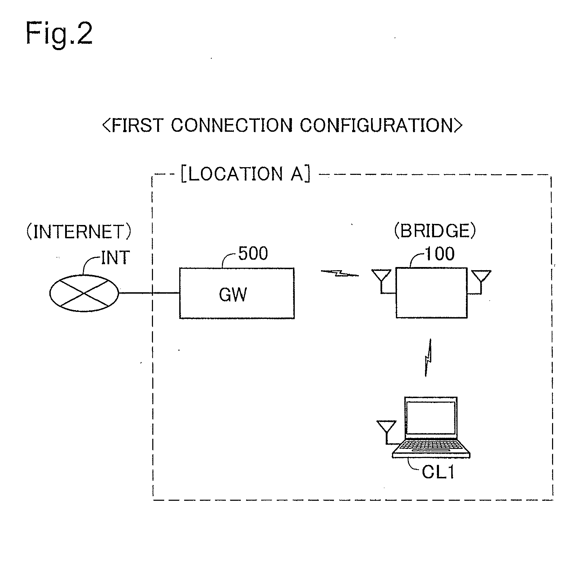

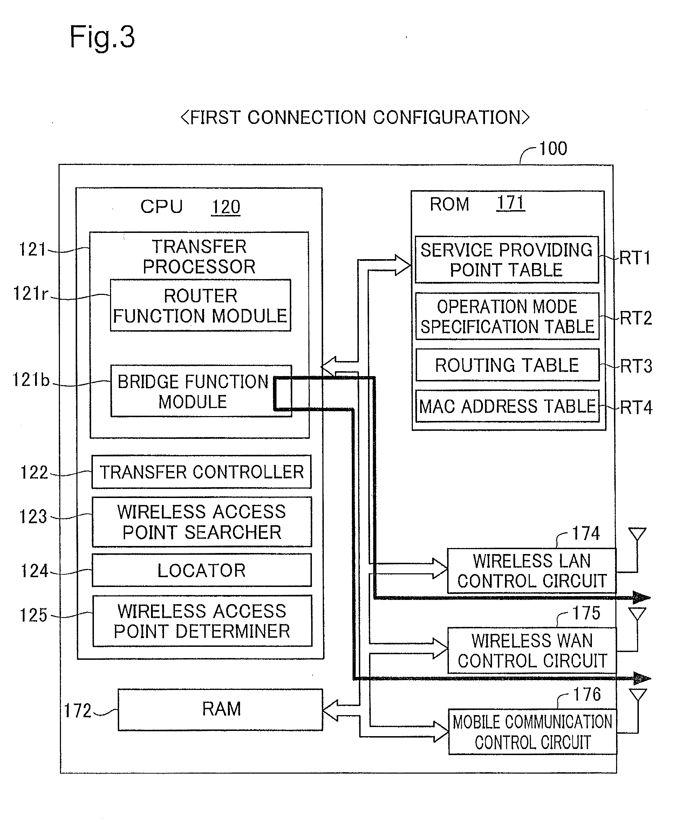

The following describes the first connection configuration. Fig. 2 illustrates the first connection configuration with the portable network connection device 100. Fig. 3 schematically illustrates the data flow in the portable network connection device 100 according to the first connection configuration shown in Fig. 2. In the first connection configuration shown in Fig. 2, the portable network connection device 100, a home gateway 500 and a client CL1 are provided at a location A. The location A may be, for example, inside the house of the user of the portable network connection device 100, and the home gateway 500 may be, for example, a router device provided by an ISP provider. The home gateway 500 is connected to the Internet INT via a broadband line. The home gateway 500 has a wireless LAN interface and is capable of establishing wireless communication with the portable network connection device 100. The client CL1 is a personal computer and works as a wireless LAN client.

In the first connection configuration, the portable network connection device 100 serves as the wireless LAN access point and as the bridge. More specifically, as shown in Fig. 3, the wireless LAN control circuit 174 receives a wireless signal output from the client CL1, extracts a layer 2 frame from the received wireless signal and transmits the extracted layer 2 frame to the bridge function module 121b. Under control of the transfer controller 122, the bridge function module 121b outputs the layer 2 frame in the form of a wireless signal via the wireless WAN control circuit 175. In an opposite manner, the wireless WAN control circuit 175 receives a wireless signal output from the home gateway 500, extracts a layer 2 frame from the received wireless signal and transmits the extracted layer 2 frame to the bridge function module 121b. Under control of the transfer controller 122, the bridge function module 121b outputs the layer 2 frame in the form of a wireless signal via the wireless LAN control circuit 174.

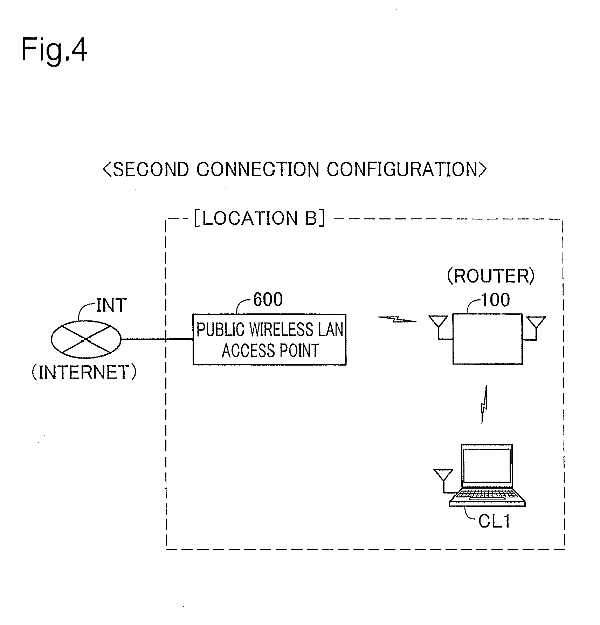

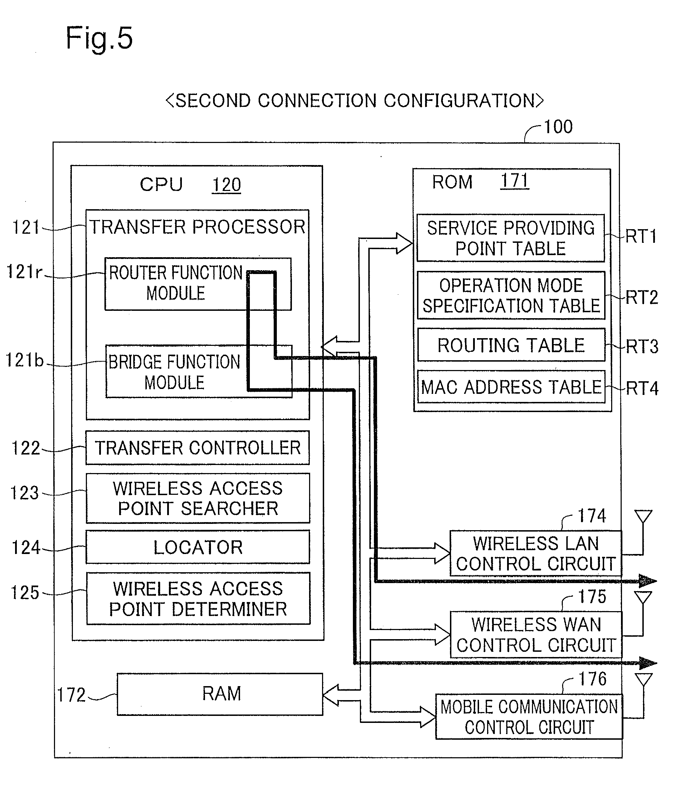

The following describes the second connection configuration. Fig. 4 illustrates the second connection configuration with the portable network connection device 100. Fig. 5 schematically illustrates the data flow in the portable network connection device 100 according to the second connection configuration shown in Fig. 4.

In the second connection configuration shown in Fig. 4, the portable network connection device 100, a public wireless LAN access point 600 and a client CL1 are provided at a location B. The public wireless LAN access point 600 is connected with the Internet and is used to connect a pre-registered wireless LAN client to the Internet. The public wireless LAN access point 600 is provided, for example, at a station or at a restaurant.

In the second connection configuration, the portable network connection device 100 serves as the wireless LAN access point and as the router. More specifically, as shown in Fig. 5, the wireless LAN control circuit 174 receives a wireless signal output from the client CL1, extracts a layer 2 frame from the received wireless signal and transmits the extracted layer 2 frame to the bridge function module 121b. Under control of the transfer controller 122, the bridge function module 121b transmits the layer 2 frame to the router function module 121r. Under control of the transfer controller 122, the router function module 121r assembles a layer 3 packet and transmits the assembled layer 3 packet to the bridge function module 121b. Under control of the transfer controller 122, the bridge function module 121b outputs a layer 2 frame in the form of a wireless signal via the wireless WAN control circuit 175. In an opposite manner, the wireless WAN control circuit 175 receives a wireless signal output from the public wireless LAN access point 600, extracts a layer 2 frame from the received wireless signal and transmits the extracted layer 2 frame to the bridge function module 121b. Under control of the transfer controller 122, the bridge function module 121b transmits the layer 2 frame to the router function module 121r. Under control of the transfer controller 122, the router function module 121r assembles a layer 3 packet and transmits the assembled layer 3 packet to the bridge function module 121b. Under control of the transfer controller 122, the bridge function module 121b outputs a layer 2 packet in the form of a wireless signal via the wireless LAN control circuit 174.

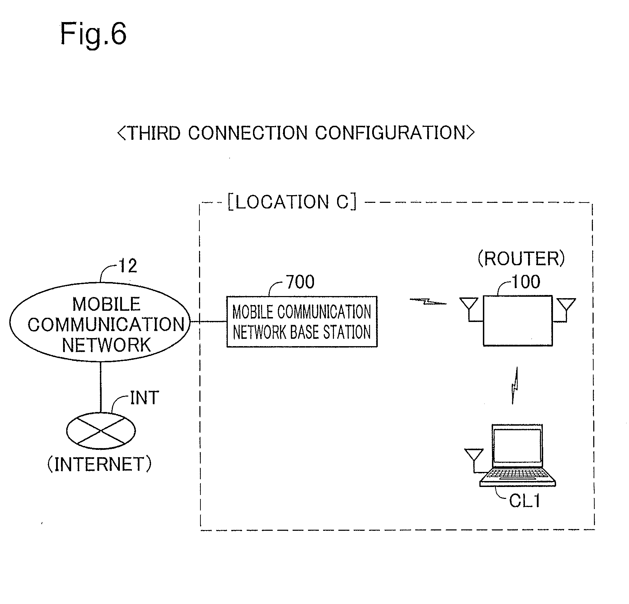

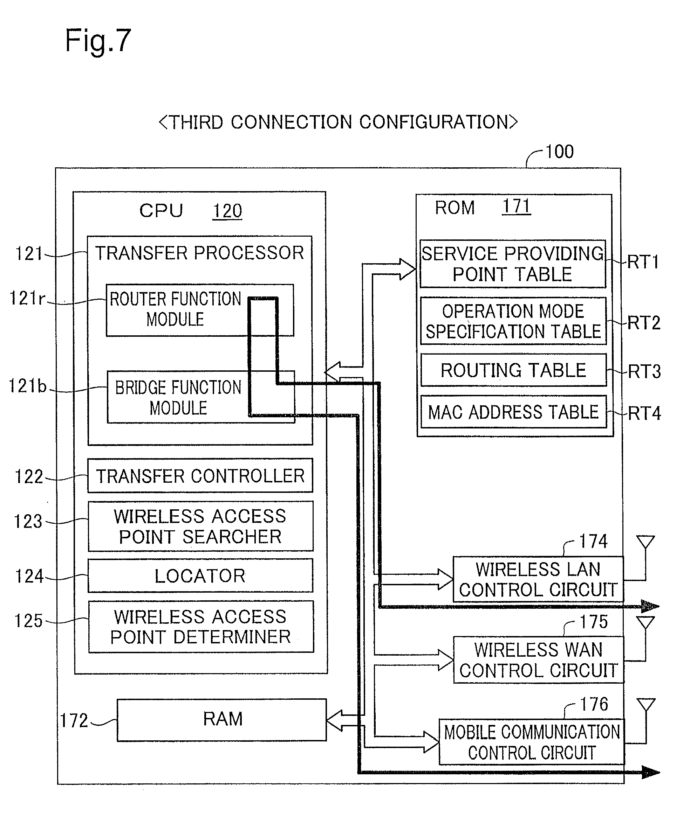

The following describes the third connection configuration. Fig. 6 illustrates the third connection configuration with the portable network connection device 100. Fig. 7 schematically illustrates the data flow in the portable network connection device 100 according to the third connection configuration shown in Fig. 6.

In the third connection configuration shown in Fig. 6, the portable network connection device 100, a mobile communication network access point 700 and a client CL1 are provided at a location C. The mobile communication network access point 700 forms part of a mobile communication network 12 and is connected with the Internet INT.

In the third connection configuration, the portable network connection device 100 serves as the wireless LAN access point and as the router. More specifically, as shown in Fig. 7, the wireless LAN control circuit 174 receives a wireless signal output from the client CL1, extracts a layer 2 frame from the received wireless signal and transmits the extracted layer 2 frame to the bridge function module 121b. Under control of the transfer controller 122, the bridge function module 121b transmits the layer 2 frame to the router function module 121r. Under control of the transfer controller 122, the router function module 121r assembles a layer 3 packet and transmits the assembled layer 3 packet to the bridge function module 121b. Under control of the transfer controller 122, the bridge function module 121b outputs a layer 2 frame in the form of a wireless signal via the mobile communication control circuit 176. In an opposite manner, the mobile communication control circuit 176 receives a wireless signal output from the mobile communication network access point 700, extracts a layer 2 frame from the received wireless signal and transmits the extracted layer 2 frame to the bridge function module 121b. Under control of the transfer controller 122, the bridge function module 121b transmits the layer 2 frame to the router function module 121r. Under control of the transfer controller 122, the router function module 121r assembles a layer 3 packet and transmits the assembled layer 3 packet to the bridge function module 121b. Under control of the transfer controller 122, the bridge function module 121b outputs a layer 2 packet in the form of a wireless signal via the wireless LAN control circuit 174. In the third connection configuration, when the mobile communication network access point 700 works as the router, the portable network connection device 100 may employ the function not as the router but only as the bridge.

### A2. Details of Service Providing Point Table

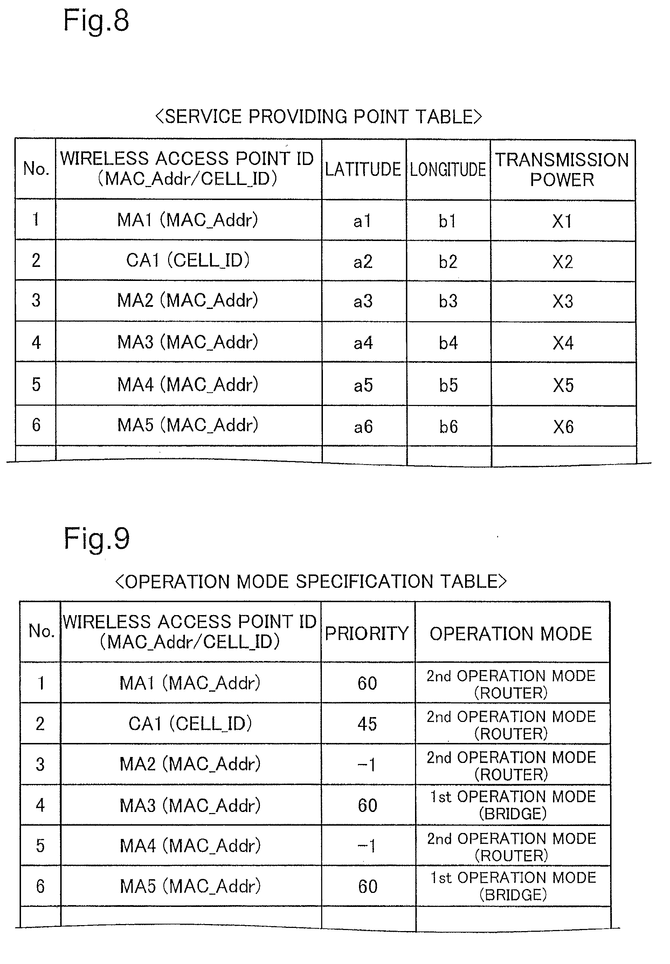

Fig. 8 illustrates one example of the settings of the service providing point table RT1 stored in the ROM 171 of the portable network connection device 100. The service providing point table RT1 correlates a wireless access point ID (identifier) of each wireless access point to the latitude and the longitude of the wireless access point and the transmission power. A MAC (Media Access Control) address for the wireless LAN access point or a cell ID for the mobile communication network access point is set as the wireless access point ID. The latitude and the longitude at the location of each wireless access point are set as the latitude and the longitude. The signal transmission power from each wireless access point is set as the transmission power. In the illustrated example of Fig. 8, there are six entries (No. 1 to No. 6). For convenience of explanation, the settings of each entry are expressed by symbolic representations.

This service providing point table RT1 may be provided by any of various methods. According to this embodiment, the service providing point table RT1 is set in advance by the user. More specifically, the user checks in advance the identifier, the latitude, the longitude and the transmission power of each of wireless access points (wireless LAN access points and mobile communication network access points) located in predicted areas where the portable network connection device 100 is expected to be used and sets the results of checking in the service providing point table RT1. According to another embodiment, the public wireless LAN service provider may provide a database correlating the identifier (MAC address) of each available wireless LAN access point to the latitude, the longitude and the transmission power and make the database open to the users. In this embodiment, the user may access this database and download information on part of the wireless LAN access points (e.g., wireless LAN access points located in the predicted areas where the portable network connection device 100 is expected to be used) or all of the wireless LAN access points to set the information in the service providing point table RT1. According to another embodiment, the public wireless LAN service provider may provide a database correlating the identifier

(cell ID) of each available wireless access point to the latitude, the longitude and the transmission power and make the database open to the users. In this embodiment, the user may similarly access the database to set information on part or all of the wireless access points in the service providing point table RT1.

### A3. Details of Operation Mode Specification Table

Fig. 9 illustrates one example of the settings of the operation mode specification table RT2. The operation mode specification table RT2 correlates the wireless access point ID of a specific wireless access point to the priority and the operation mode. The operation mode specification table RT2 is set in advance by the user and is stored in the ROM 171.

In the illustrated example of Fig. 9, there are six entries (No. 1 to No. 6). The first entry (No. 1) includes a MAC address "MA1" as the wireless access point ID, "60" as the priority and the "second operation mode (router)" as the operation mode. The second entry (No. 2) includes a cell ID "CA1" as the wireless access point ID, "45" as the priority and the "second operation mode" as the operation mode. The third entry (No. 3) includes a MAC address "MA2" as the wireless access point ID, "-1" as the priority and the "second operation mode" as the operation mode. The fourth entry (No. 4) includes a MAC address "MAC3" as the wireless access point ID, "60" as the priority and the "first operation mode (bridge)" as the operation mode. The fifth entry (No. 5) includes a MAC address "MAC4" as the wireless access point ID, "-1" as the priority and the "second operation mode" as the operation mode. The sixth entry (No. 6) includes a MAC address "MAC5" as the wireless access point ID, "60" as the priority and the "first operation mode" as the operation mode. For convenience of explanation, the settings of the wireless access point ID in Fig. 9 are expressed by symbolic representations.

The wireless access point ID of the operation mode specification table RT2 is identical with the wireless access point ID of the service providing point table RT1 and is not specifically explained here. The priority is referred to, when the wireless access point for connecting with the upper-layer network is determined in the operation mode changeover process described later. The entry (wireless access point) with the greater value has the higher possibility of being determined as the wireless access point for connecting with the upper-layer network. The user may accordingly set the higher priority to the wireless access point having the higher demand to be used for the wireless access point for connecting with the upper-layer network. For example, the first, the fourth and the sixth entries have the value "60" as the priority, which is relatively higher than those of the other entries. The third and the fifth entries have the value "-1" as the priority, which is relatively lower than those of the other entries.

For example, the respective entries shown in Fig. 9 may be set, based on the following circumstances. The wireless access point of the first entry may be the public wireless LAN access point frequently used by the user and may accordingly have the higher demand to be used for the wireless access point for connecting with the upper-layer network. The wireless access point of the fourth entry may be the gateway located in the user's house, and the wireless access point of the sixth entry may be the router device (wireless router) located in the user's office, so that these wireless access points may similarly have the higher demand to be for the wireless access point for connecting with the upper-layer network. The wireless access points of the third and the fifth entries may be the public wireless LAN access points of the public wireless LAN connection services, which the user does not subscribe, and may accordingly have the low demand to be used for the wireless access point for connecting with the upper-layer network.

In the operation mode specification table RT2, the user specifies in advance the operation mode to be set in the portable network connection device 100 (more specifically, transfer processor 121) when the corresponding wireless access point is determined as the wireless access point for connecting with the upper-layer network. For example, when the wireless access point of the first entry is the public wireless LAN access point 600 shown in Fig. 4, the second operation mode (router) may be set as the operation mode of the portable network connection device 100. In another example, when the wireless access point of the fourth entry is the home gateway 500 shown in Fig. 2, the first operation mode (bridge) may be set as the operation mode of the portable network connection device 100.

The portable network connection device 100 having the structure described above performs the operation mode changeover process described below to set an adequate mode as the operation mode for packet forwarding in the portable network connection device 100.

The transfer processor 121 and the transfer controller 122 according to the embodiment respectively correspond to the wireless communication controller and the operation mode controller according to the claims. The service providing point table RT1 corresponds to the wireless access point location table according to the claims. The operation mode specification table RT2 corresponds to the operation mode specification table and the priority table according to the claims. The wireless access point searcher 123 corresponds to the received signal strength detector according to the claims.

### A4. Operation Mode Changeover Process

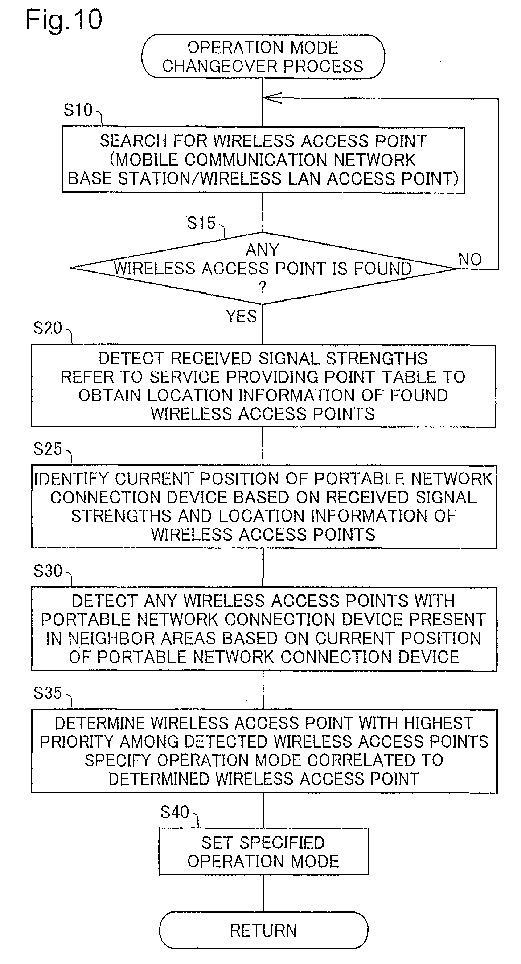

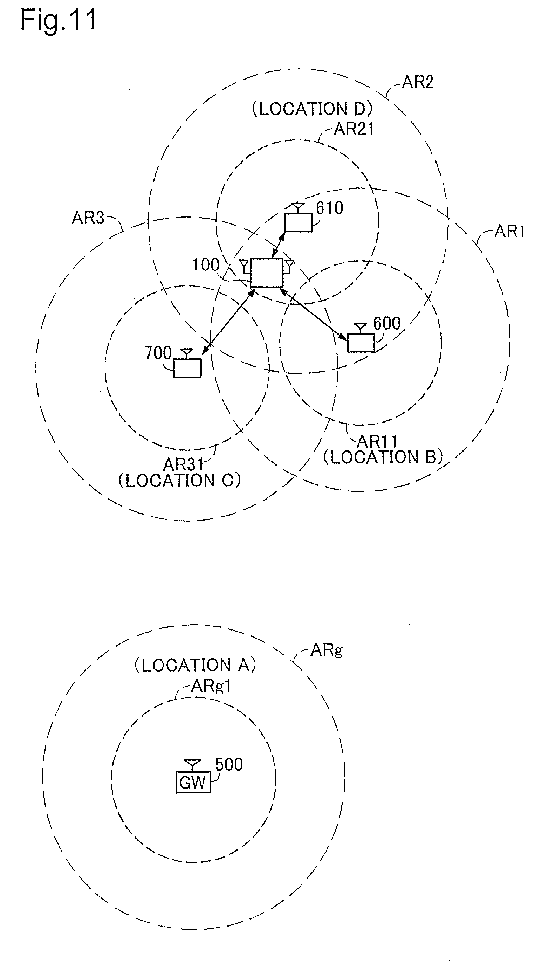

Fig. 10 is a flowchart showing the procedure of operation mode changeover process according to the first embodiment. Fig. 11 illustrates an exemplary configuration of the portable network connection device and the wireless access points during the operation mode changeover process.

Fig. 11 shows the relative positions of the portable network connection device 100, the home gateway 500 shown in Fig. 2, the public wireless LAN access point 600 shown in Fig. 4, the mobile communication network access point 700 shown in Fig. 6, and a wireless router 610. The wireless router 610 is provided in a location D (e.g., the user's office). As shown in Fig. 11, the home gateway 500 is located at a position significantly remote from the other wireless access points (mobile communication network access point 700, public wireless LAN access point 600 and wireless router 610). The portable network connection device 100 is located in an area surrounded by the public wireless LAN access point 600, the wireless router 610 and the mobile communication network access point 700. A client is located near the portable network connection device 100.

In Fig. 11, a coverage area of the signal output from each wireless access point (hereinafter called "coverage area") and an area within a predetermined distance from each wireless access point (hereinafter called "neighbor area") are shown by the circles of broken line. More specifically, there are a coverage area ARg and a neighbor area ARg1 around the home gateway 500, a coverage area AR1 and a neighbor area AR11 around the public wireless LAN access point 600, a coverage area AR2 and a neighbor area AR21 around the wireless router 610, and a coverage area AR3 and a neighbor area AR31 around the mobile communication network access point 700. The "predetermined distance" for specifying the neighbor area is the distance to specify the area that has the received signal strength of the signal output from each wireless access point at or above a preset level and ensures stable transmission of data via the upper-layer network, and is set in advance in the portable network connection device 100. The predetermined distance may be, for example, 30 meters.

The operation mode changeover process shown in Fig. 10 is triggered by power-on of the portable network connection device 100. In the initial state, the operation mode of the portable network connection device 100 (transfer processor 121) is set to the second operation mode (router).

The wireless access point searcher 123 receives a signal output from each wireless access point via the wireless WAN control circuit 175 and the mobile communication control circuit 176 to find the wireless access point (step S 10), and determines whether any wireless access point is found (step S 15). Any of known techniques may be employed as the method of searching the wireless access point. For example, the wireless access point searcher 123 may receive a beacon output from a wireless LAN access point to find the wireless LAN access point. In another example, the wireless access point searcher 123 may broadcast a probe request and receive a probe response from a wireless LAN access point to find the wireless LAN access point. The SSID (Service Set Identifier) set in the probe request may be, for example, a preset value in an available profile (group of information used for wireless communication, such as SSID, encryption key and cryptography) stored in the ROM 171 with respect to a certain wireless LAN access point. The beacon or the probe response includes a MAC address of the wireless LAN access point. The signal output from a mobile communication network access point includes a cell ID. When a wireless access point is found at step S10, the wireless access point searcher 123 obtains the wireless access point ID (MAC address or cell ID) allocated to the found wireless access point. In the illustrated configuration of Fig. 11, the portable network connection device 100 is located at the overlap position of the coverage area AR1 of the public wireless LAN access point 600, the coverage area AR2 of the wireless router 610 and the coverage area AR3 of the mobile communication network access point 700. In the state where the portable network connection device 100 is located at the position of Fig. 11, the public wireless LAN access point 600, the wireless router 610 and the mobile communication network access point 700 are accordingly found at step S10. In the state of Fig. 11, the portable network connection device 100 is not located in the coverage area ARg of the home gateway 500, so that the home gateway 500 is not found at step S10.

When no wireless access point is found as the result of the search for wireless access point (step S 15: No), the processing flow returns to step S 10. In this case, the operation mode of the portable network connection device 100 is kept to the second operation mode as the initial setting. When any wireless access point is found (step S 15: Yes), on the other hand, the wireless access point searcher 123 detects or computes the received signal strength of the signal received in finding the wireless access point and refers to the service providing point table RT1 with the wireless access point ID (MAC address or cell ID) of the found wireless access point as the key to obtain the location information (latitude and longitude) of the found wireless access point (step S20).

The locator 124 identifies the current position (latitude and longitude) of the portable network connection device 100, based on the received signal strength detected at step S20 and the location information of the wireless access point obtained at step S20 (step S25). For example, when three wireless access points (two public wireless LAN access points 600 and 610 and one mobile communication network access point 700) are found at step S 10 as described above, the locator 124 identifies the current position of the portable network connection device 100 by the following procedure. The locator 124 first computes the power decay from each of the found wireless access points to the portable network connection device 100, based on the transmission output of each of the found wireless access points set in the service providing point table RT1 and the received signal strength detected at step S20. On the assumption of the same radio propagation environment (presence or absence of any obstacle) between each of the wireless access points and the portable network connection device 100, the greater distance between the wireless access point and the portable network connection device 100 is expected to give the greater power decay. The locator 124 subsequently specifies a first straight line of candidate points for the current position of the portable network connection device 100 from the ratio of the power decays with respect to one combination of two arbitrary wireless access points selected among the three found wireless access points and the location information (latitude and longitude) of the two selected wireless access points. Similarly the locator 124 specifies a second straight line of candidate points for the current position of the portable network connection device 100 from the ratio of the power decays with respect to another combination of two selected arbitrary wireless access points and the location information (latitude and longitude) of the two selected wireless access points. The locator 124 then determines the intersection (latitude and longitude) of the first straight line and the second straight line and identifies or estimates this intersection as the current position of the portable network connection device 100.

When the number of wireless access points found at step S10 is two, the locator 124 may specify the first straight line as explained above, determine the intersection of the specified first straight line and a line connecting the two wireless access points, and identify or estimate this intersection as the current position of the portable network connection device 100. When the number of wireless access points found at step S10 is only one, the locator 124 may identify or estimate a position in a preset direction at a preset distance away from the found wireless access point, as the current position of the portable network connection device 100.

After identification of the current position of the portable network connection device 100 at step S25, the wireless access point determiner 125 detects any wireless access point with the portable network connection device 100 present in its neighbor area, based on the identified current position of the portable network connection device 100 (step S30). As described previously, the neighbor area represents the area within the predetermined distance from the wireless access point. The wireless access point determiner 125 accordingly computes the distance between the portable network connection device 100 and each of the found wireless access points and detects any wireless access point having the distance of or below the predetermined distance, based on the current position (latitude and longitude) of the portable network connection device 100 and the location information (latitude and longitude) of the respective wireless access points set in the service providing point table RT1. When the portable network connection device 100 is located as illustrated in Fig. 11, the portable network connection device 100 belongs to only the neighbor area AR21 of the wireless router 610 and does not belong to the neighbor areas of the other wireless access points. Only the wireless router 610 is accordingly detected at step S30.

The wireless access point determiner 125 determines a wireless access point with the highest priority among the wireless access points detected at step S30, as the wireless access point for connecting with the upper-layer network, and refers to the operation mode specification table RT2 to specify the operation mode correlated to the determined wireless access point for connecting with the upper-layer network (step S35). The transfer controller 122 sets the operation mode specified at step S35 to the operation mode of the transfer processor 121 (step S40). In the illustrated example of Fig. 11, only the wireless router 610 is detected as the wireless access point at step S30, so that the operation mode correlated to the wireless router 610 is specified at step S35.

For example, when the wireless router 610 is the wireless access point with the MAC address "MA5", the "first operation mode" correlated to the wireless router 610 is specified as the operation mode by referring to the operation mode specification table RT2 shown in Fig. 9. The operation mode of the transfer processor 121 is thus changed from the initial setting "second operation mode (router)" to the specified operation mode "first operation mode (bridge)", and the portable network connection device 100 serves as the bridge. When the wireless router 610 is provided in the user's office (location D), the portable network connection device 100 serving as the bridge advantageously prevents two routers from being present simultaneously in the office. The user is thus allowed to connect the client CL1 to the Internet INT via the portable network connection device 100 and the wireless router 610.

According to this embodiment, the operation mode changeover process shown in Fig. 10 is repeatedly performed at preset intervals. When the user moves with the portable network connection device 100, the operation mode suitable for the environment of the move destination is set as the operation mode for packet forwarding in the portable network connection device 100. According to another embodiment, the portable network connection device 100 may be configured to have, for example, a button to start the operation mode changeover process, and the operation mode changeover process shown in Fig. 10 may be performed once or a preset number of times explicitly specified by the user's press of the button.

As described above, the portable network connection device 100 according to the first embodiment identifies the current position of the portable network connection device 100, determines the wireless access point for connecting with the upper-layer network, based on the identified current position, and sets the operation mode correlated to the determined wireless access point for connecting with the upper-layer network, as the operation mode of the transfer processor 121. This ensures adequate setting of the operation mode for packet forwarding in the portable network connection device 100 when the client CL1 is connected to the upper-layer network, such as the Internet.

Additionally, according to the embodiment, the operation mode for packet forwarding in the portable network connection device 100 is specified, based on the current position of the portable network connection device 100. According to the embodiment, the optimum wireless access point can be determined as the wireless access point for connecting with the upper-layer network at the position where the portable network connection device 100 is currently located. The operation mode for packet forwarding in the portable network connection device 100 can thus be changed to or set to the operation mode adequate for the current position of the portable network connection device 100. This procedure has the higher possibility of setting the adequate operation mode, compared with the procedure of determining the wireless access point for connecting with the upper-layer network based on only the received signal strengths of the signals output from wireless access points and setting the operation mode corresponding to the determined wireless access point for connecting with the upper-layer network. The received signal strength of the signal output from each of the wireless access points may vary with the presence or the absence of any obstacle, such as people or vehicles, between the portable network connection device 100 and the wireless access point. The portable network connection device 100 of the first embodiment is, however, free from erroneous settings due to the varying received signal strength. The portable network connection device 100 of the first embodiment determines the wireless access point for connecting with the upper-layer network, based on the distance between the portable network connection device 100 and each of the wireless access points at the current position. The portable network connection device 100 can thus determine the optimum wireless access point and set the adequate operation mode.

According to this embodiment, the wireless access point for connecting with the upper-layer network is determined, based on the priority set in the operation mode specification table RT2. Setting the higher priority to the wireless access point having the higher demand to be used for the wireless access point for connecting with the upper-layer network raises the possibility that the wireless access point having the higher demand is determined as the wireless access point for connecting with the upper-layer network. Setting the relatively low priority to the wireless access point having the low demand to be used for the wireless access point for connecting with the upper-layer network reduces the possibility that the wireless access point having the low demand is determined as the wireless access point for connecting with the upper-layer network. The low priority is accordingly set to the wireless access point that is used for identifying the current position of the portable network connection device 100 but is not used as the wireless access point for connecting with the upper-layer network. The wireless access point with the low priority can be identified and effectively used for the required purpose.

### B. Second Embodiment

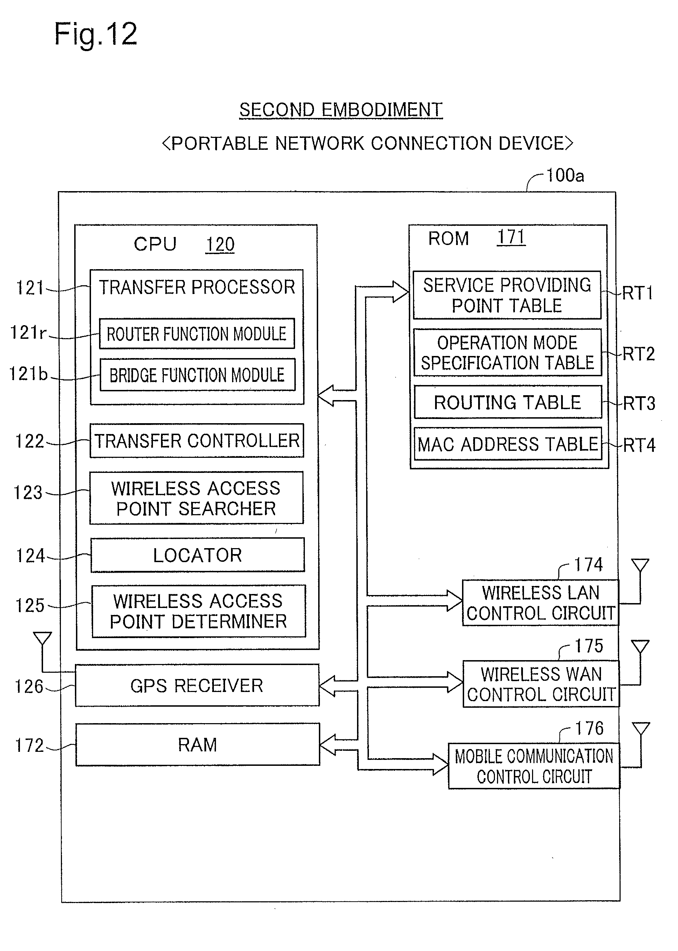

Fig. 12 is a block diagram illustrating the structure of a portable network connection device 100a according to a second embodiment. The portable network connection device 100a of the second embodiment differs by addition of a GPS (Global Positioning System) receiver 126 from the portable network connection device 100 of the first embodiment shown in Fig. 1, but otherwise has the similar structure to that of the portable network connection device 100. The GPS receiver 126 includes an antenna for receiving signals and an amplifier and receives GPS signals (positioning signals) sent from GPS satellites (positioning satellites) to identify the current position.

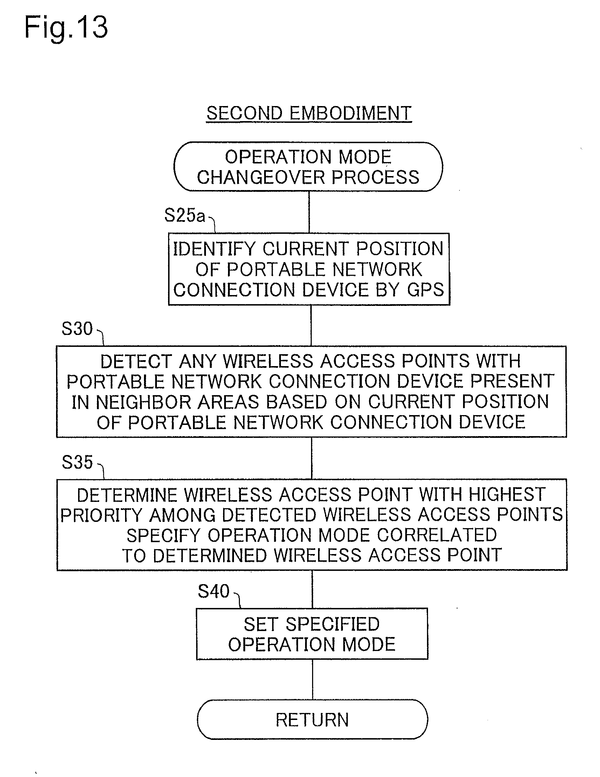

Fig. 13 is a flowchart showing the procedure of operation mode changeover process according to the second embodiment. The operation mode changeover process of the second embodiment differs by omission of steps S10 to S20 and replacement of step S25 with step S25a from the operation mode changeover process of the first embodiment shown in Fig. 10 but is otherwise similar to that of the first embodiment. The procedure of the first embodiment searches for wireless access points and identifies the current position of the portable network connection device 100, based on the location information of the found wireless access points and the detected received signal strengths. The procedure of the second embodiment, on the other hand, identifies the current position of the portable network connection device 100a by GPS. More specifically, the GPS receiver 126 identifies the current position of the portable network connection device 100a, based on the GPS signals sent from the GPS satellites (step S25a). After identifying the current position of the portable network connection device 100a, the procedure performs the processing of steps S30 to S40 in the same manner as the first embodiment described above to set the operation mode for packet forwarding in the portable network connection device 100a.

The portable network connection device 100a according to the second embodiment described above has the similar advantageous effects to those of the portable network connection device 100 according to the first embodiment. The procedure of the second embodiment identifies the current position of the portable network connection device 100a by GPS and is thus less affected by the varying received signal strengths of the wireless access points. According to another embodiment, the method of identifying the current position according to the first embodiment may be combined with the method of identifying the current position by GPS, in order to further improve the accuracy of identifying the current position.

### C. Third Embodiment

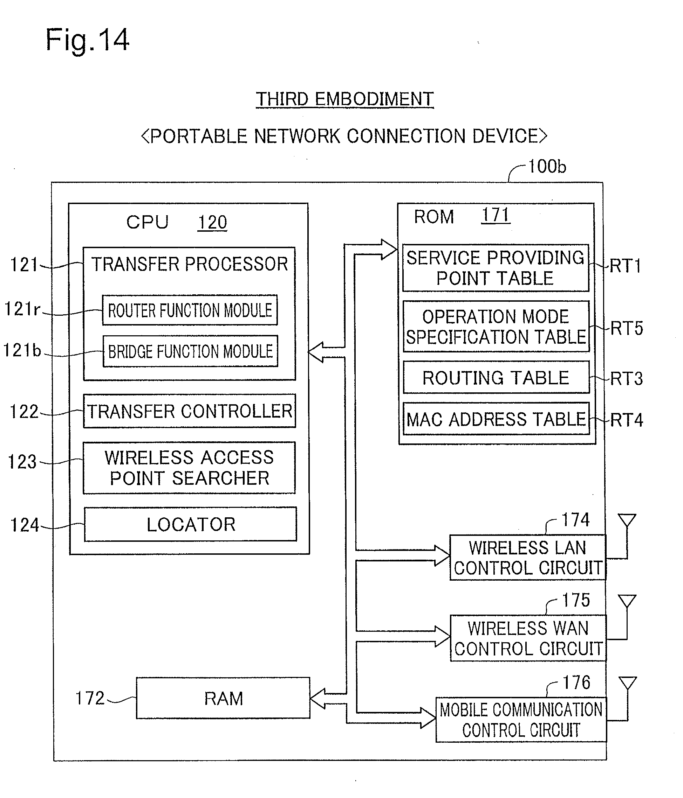

Fig. 14 is a block diagram illustrating the structure of a portable network connection device 100b according to a third embodiment. The portable network connection device 100b of the third embodiment differs by omission of the wireless access point determiner 125 and replacement of the operation mode specification table RT2 with another operation mode specification table RT5 from the portable network connection device 100 of the first embodiment shown in Fig. 1, but otherwise has the similar structure to that of the portable network connection device 100.

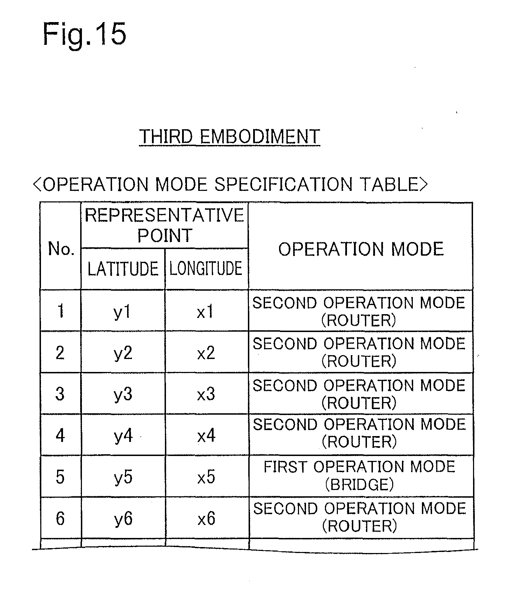

Fig. 15 illustrates one example of the settings of the operation mode specification table RT5 shown in Fig. 14. The operation mode specification table RT5 correlates the location information (latitude and longitude) to the operation mode with respect to specified representative points and is set in advance by the user and stored in the ROM 171. For convenience of explanation, the settings of the location information on the representative points are expressed by symbolic representations in Fig. 15.

The term "representative point" herein means the point arbitrarily set by the user. The user may specify arbitrary positions in the predicted areas where the portable network connection device 100b is expected to be used, as representative points. Additionally, the user may set the adequate operation mode when a nearest wireless access point to each of the set representative points is used as the wireless access point for connecting with the upper-layer network. For example, when the home gateway 500, the public wireless LAN access point 600, the mobile communication network access point 700 and the wireless router 610 are located as illustrated in Fig. 11, the user may specify a certain position close to the home gateway 500 (for example, position at several meters away from the home gateway 500) as a representative point and set the "first operation mode" for this representative point. Similarly the user may specify a certain position close to the public wireless LAN access point 600 as a representative point and set the "second operation mode" for this representative point, may specify a certain position close to the wireless router 610 as a representative point and set the "first operation mode" for this representative point, and may specify a certain position close to the mobile communication network access point 700 as a representative point and set the "second operation mode" for this representative point.

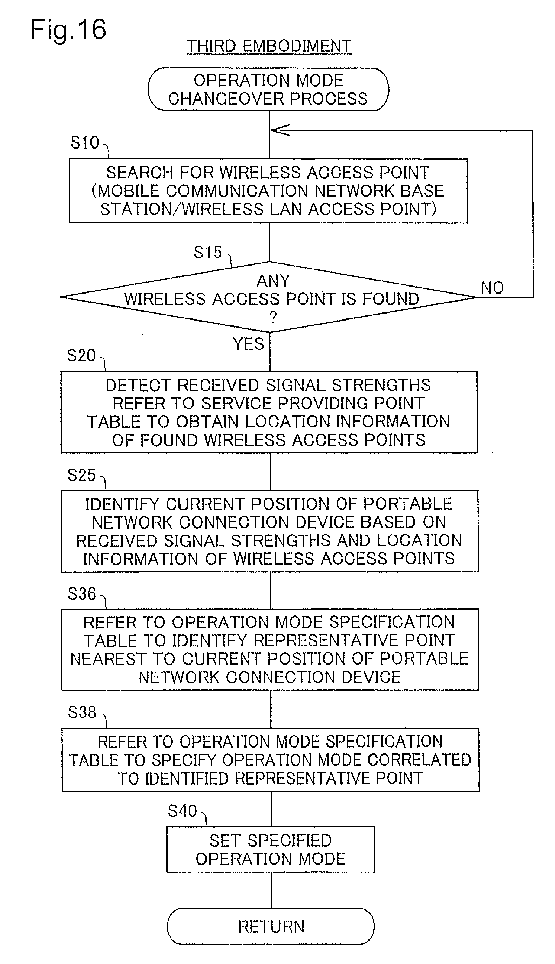

Fig. 16 is a flowchart showing the procedure of operation mode changeover process according to the third embodiment. The operation mode changeover process of the third embodiment differs by replacement of steps S30 and S35 with steps S36 and S38 from the operation mode changeover process of the first embodiment shown in Fig. 10 but is otherwise similar to that of the first embodiment.

After identification of the current position of the portable network connection device 100b by the processing of steps S10 to S25, the locator 124 refers to the operation mode specification table RT5 to identify the representative point nearest to the current position of the portable network connection device 100b (step S36). The locator 124 subsequently refers to the operation mode specification table RT5 to specify the operation mode correlated to the representative point identified at step S36 (step S38). After specification of the operation mode, the transfer controller 122 performs the processing of step S40 in the same manner as the first embodiment described above. For example, when the fifth representative point (latitude y5, longitude x5) shown in the operation mode specification table RT5 of Fig. 15 is identified as the representative point nearest to the current position of the portable network connection device 100b, the transfer controller 122 sets the first operation mode correlated to the fifth representative point as the operation mode of the transfer processor 121.

The portable network connection device 100b according to the third embodiment described above has the similar advantageous effects to those of the portable network connection device 100 according to the first embodiment. Additionally, the portable network connection device 100b of the third embodiment employs the simple procedure to specify and set the operation mode after identifying the current position. More specifically, the portable network connection device 100b only requires the simple procedure of identifying the representative point nearest to its current position (step S36) and specifying the operation mode correlated to the identified representative point (step S38). This shortens the time period required for the processing of steps S10 to S40 and enables the operation mode of the transfer processor 121 to be promptly set to or changed to the adequate operation mode when there is a need to change over the operation mode with move of the portable network connection device 100b.

The procedure of the third embodiment selects the certain positions in the predicted areas where the portable network connection device 100b is expected to be located, as the representative points and thus enables the adequate operation mode to be set at the position where the portable network connection device 100b is located, as the operation mode of the transfer processor 121.

### D. Fourth Embodiment

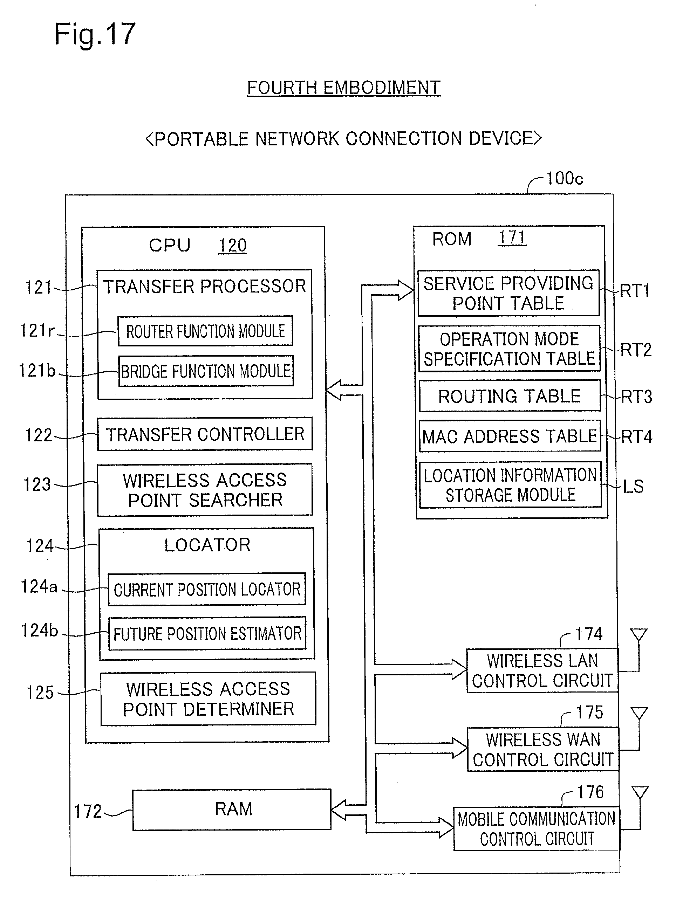

Fig. 17 is a block diagram illustrating the structure of a portable network connection device 100c according to a fourth embodiment. The portable network connection device 100c of the fourth embodiment differs by addition of a current position locator 124a and a further position estimator 124b included in the locator 124 and a location information storage module LS provided in the ROM 171 from the portable network connection device 100 of the first embodiment shown in Fig. 1, but otherwise has the similar structure to that of the portable network connection device 100.

The current position locator 124a identifies the current position of the portable network connection device 100c in the operation mode changeover process. The future position estimator 124b estimates the future position of the portable network connection device 100c after a preset period of time in the operation mode changeover process. The location information storage module LS stores the information (latitude and longitude) on the current position of the portable network connection device 100c in correlation to the time point when the current position is identified (hereinafter called "position-identified time point").

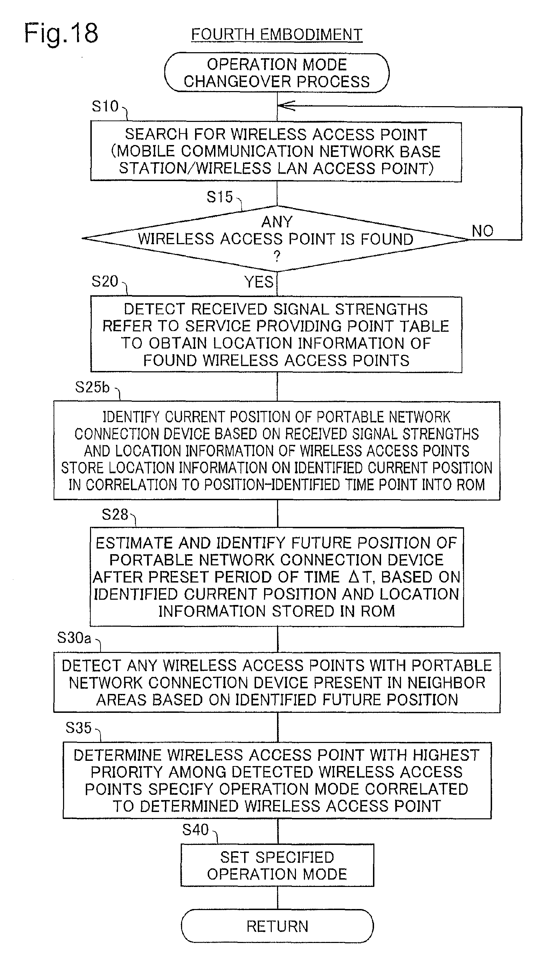

Fig. 18 is a flowchart showing the procedure of operation mode changeover process according to the fourth embodiment. The operation mode changeover process of the fourth embodiment differs by replacement of steps S25 and S30 with steps S25b and S30a and addition of step S28 from the operation mode changeover process of the first embodiment shown in Fig. 10 but is otherwise similar to that of the first embodiment.

After acquisition of the location information of the found wireless access points by the processing of steps S10 to S20, the current position locator 124a identifies the current position of the portable network connection device 100c, based on the location information of the found wireless access points and the detected received signal strengths, and stores the location information on the identified current position in correlation to the position-identified time point into the location information storage module LS of the ROM 171 (step S25b). The method of identifying the current position at step S25b follows the procedure of the first embodiment described above and is thus not specifically explained here.

The future position estimator 124b estimates and identifies the future position of the portable network connection device 100c after a preset period of time ΔT, based on the current position identified at step S25b in the current cycle of the operation mode changeover process and the location information on the current positions stored in the ROM 171 in the previous cycles (step S28). This identifies the predicted position where the portable network connection device 100c is located with high probability after the preset period of time ΔT, as the location information of the portable network connection device 100c. According to this embodiment, the period of time ΔT is set as a time period required for pre-processing before the portable network connection device 100c establishes wireless communication with the determined wireless access point. The pre-processing prior to the start of wireless communication may be, for example, authentication performed between the wireless access point or an authentication server and the portable network connection device 100c. According to this embodiment, the period of time ΔT may be set by experimentally measuring the time period required for such pre-processing. In the description hereinafter, it is assumed that the period of time ΔT is set to 3 seconds. According to another embodiment, the period of time ΔT may be determined by adding a predetermined marginal time to the time period experimentally measured as required for pre-processing.

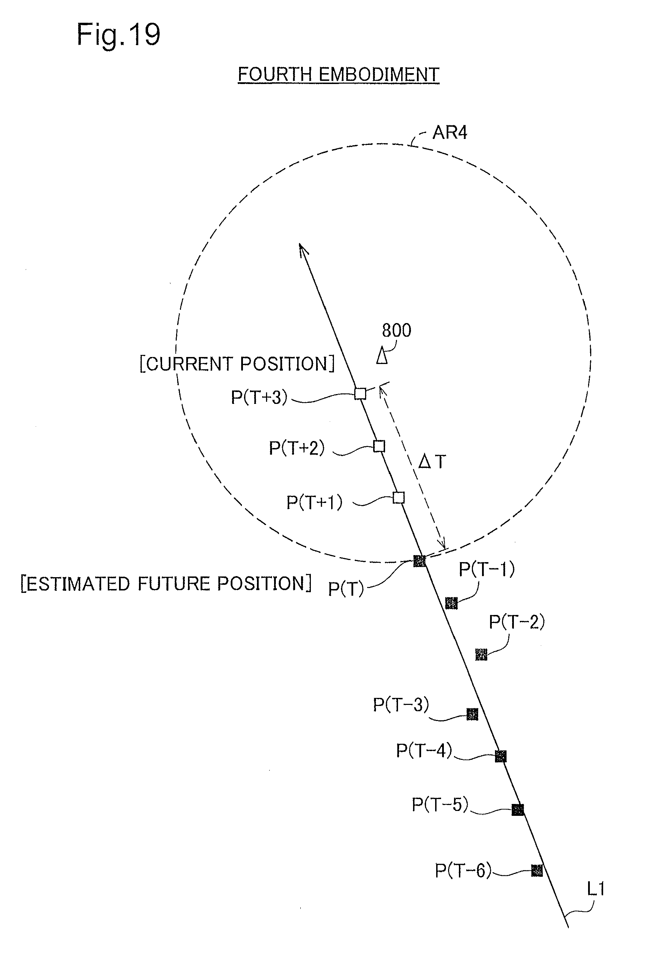

Fig. 19 schematically illustrates one example of estimating the future position of the portable network connection device 100c at step S28. In Fig. 19, a point P(T) represents the current position of the portable network connection device 100c, points P(T-N) (where N denotes integers of 1 to 6) represent the past positions of the portable network connection device 100c N seconds before, and points P(T+M) (where M denotes integers of 1 to 3) represent the future positions of the portable network connection device 100c after M seconds. In the illustrated example of Fig. 19, the portable network connection device 100c is located on the boundary of a neighbor area AR4 of a wireless access point 800 at the current time point (i.e., the time point when the processing of step S25b is performed in the current cycle of the operation mode changeover process). As clearly understood from the past positions and the current position of the portable network connection device 100c shown in Fig. 19, the portable network connection device 100c moves toward the access point 800. The location information on the current position of the portable network connection device 100c has been recorded at every second since 6 seconds prior to the current time point in the portable network connection device 100c in the illustrated example of Fig. 19. The location information (latitude and longitude) on the points P(T-6) to P(T-1) is thus recorded in correlation to their position-identified time points in the location information storage module LS.

When the portable network connection device 100c moves as illustrated in Fig. 19, the future position estimator 124b may estimate the future position of the portable network connection device 100c after the preset period of time (3 seconds) at step S28, for example, by the following procedure. The future position estimator 124b first determines a regression curve (hereinafter also called "move line L1") approximate to the moving track of the portable network connection device 100c, based on the current position (latitude and longitude) identified at step S25b and the location information (latitude and longitude) on the points P(T-6) to P(T1) stored in the location information storage module LS. A known technique, such as least squares method, may be employed to determine the regression curve. The move line L1 is obtained as a linear curve (straight line) in the illustrated example of Fig. 19 but may be an m-order (wherein m is an integer of 2 or greater value) regression curve. The future position estimator 124b estimates the future position of the portable network connection device 100c on the move line after the preset period of time ΔT, based on the current position (latitude and longitude) identified at step S25b and the location information (latitude and longitude) on the points P(T-6) to P(T-1) stored in the location information storage module LS. In the illustrated example of Fig. 19, the future position estimator 124b calculates the average moving distance between adjacent points or the average moving distance per second (i.e., average moving rate) from the current position (point P(T)) and the past positions (points P(T-6) to P(T-1)), estimates the position on the move line L1 after the preset period of time (3 seconds) based on the average moving rate, and identifies the estimated position as the future position of the portable network connection device 100c.

After identification of the future position of the portable network connection device 100c at step S28, the wireless access point determiner 125 detects any wireless access point with the portable network connection device 100c present in its neighbor area, based on the identified future position of the portable network connection device 100c (step S30a). The concrete procedure of step S30a is similar to that of step S30 described in the first embodiment, except the future position of the portable network connection device is used instead of the current position of the portable network connection device.

After detecting the wireless access points at step S30a, the procedure performs the processing of steps S35 and S40 in the same manner as the first embodiment described above to set the operation mode of the transfer processor 121. For example, when the detected wireless access point 800 (Fig. 19) has the relatively higher priority than those of the other detected wireless access point (not shown), the wireless access point determiner 125 determines this wireless access point 800 as the wireless access point for connecting with the upper-layer network at step S35. It is assumed that the operation mode correlated to the wireless access point 800 determined at step S35 is the first operation mode (bridge), while the operation mode set at the past position or point P(T-1) was the second operation mode (router). In this case, the operation mode is changed at the current position or point P(T) from the second operation mode to the first operation mode. In one example, the user may activate an application program (e.g., program for accessing a Web server by HTTP (Hyper Text Transfer Protocol) to access the Web server via the Internet at the current position. The portable network connection device 100c then performs pre-processing, such as authentication, with the determined wireless access point for connecting with the upper-layer network, in order to access the upper-layer network. At the time point when such pre-processing has been completed, the portable network connection device 100c is located at the position closer to the wireless access point 800 (e.g., point P(T+3) shown in Fig. 19), compared with the position at the time point when the pre-processing was started. At the time when data transmission via the Internet starts after completion of the pre-processing, the optimum operation mode for the wireless access point 800 determined as the wireless access point for connecting with the upper-layer network has already been set as the operation mode for packet forwarding in the portable network connection device 100c. The user is thus not required to reset the operation mode after completion of the pre-processing and is allowed to access the upper-layer network immediately after completion of the pre-processing.

The portable network connection device 100c according to the fourth embodiment described above has the similar advantageous effects to those of the portable network connection device 100 according to the first embodiment. Additionally, the portable network connection device 100c of the fourth embodiment identifies the predicted position where the portable network connection device 100c is expected to be located after the preset period of time ΔT with high probability, as the future position of the portable network connection device 100c. The portable network connection device 100c then sets the operation mode correlated to the wireless access point for connecting with the upper-layer network determined to be used at the identified future position, as the operation mode of the transfer processor 121. This enables preliminary setting of the optimum operation mode for the access of the portable network connection device 100c to the upper-layer network, such as the Internet, after the preset period of time ΔT.

The portable network connection device 100c sets the period of time ΔT to be at least the time period required for pre-processing before the portable network connection device 100c establishes wireless communication with the determined wireless access point. The optimum operation mode for accessing the upper-layer network has thus already been set at the time point when the pre-processing is completed. This procedure advantageously shortens the overhead time or the time period required before the actual access to the upper -layer network, such as the Internet, compared with the procedure of setting or changing the operation mode to the optimum operation mode after completion of pre-processing.

The future position of the portable network connection device 100c is identified, based on the past positions of the portable network connection device 100c, i.e., the record of the current positions at the respective position-identified time points. This enables estimation of the future position with high accuracy.

The current position of the portable network connection device 100c has been recorded in correlation to the position-identified time point in the ROM 171, so that the past positions of the portable network connection device 100c can be easily referred to. Using the location information on the past positions recorded as the current positions in correlation to the position-identified time points enables estimation of the move line L1 including the actual moving track of the portable network connection device 100c and the predicted track, thus allowing the future position of the portable network connection device 100c to be identified with high accuracy.

The position-identified time point according to the fourth embodiment corresponds to the time period-related information according to the claims.

### E. Modification

The disclosure is not limited to the above embodiments or their applications, but a multiplicity of variations and modifications may be made to the embodiments without departing from the scope of the invention, which is defined by the appended claims. Some examples of possible modification are given below.

### E1. Modification 1

The first, the third and the fourth embodiments employ the method of identifying the current position of the portable network connection device 100, 100b or 100c, based on the received signal strengths of the signals output from the found wireless access points and the location information (latitude and longitude) of the respective wireless access points. The second embodiment uses GPS to identify the current position of the portable network connection device 100c. The disclosure is, however, not limited to these methods. For example, the current position of the portable network connection device may be identified by any suitable satellite positioning system other than GPS, such as QZSS (Quasi-Zenith Satellite System). According to the second embodiment, the portable network connection device 100a may be configured to have a user interface for setting the current position of the portable network connection device 100a, instead of the GPS receiver 126. In this configuration, the user may provide an exclusive GPS receiver separate from the portable network connection device 100a, use the exclusive GPS receiver to identify the current position of the portable network connection device 100a, and set the identified current position of the portable network connection device 100a via the user interface in the portable network connection device 100a. In this configuration of the portable network connection device 100a, the user interface corresponds to the locator according to the claims.

### E2. Modification 2

According to the first embodiment, the operation mode specification table RT2 is set in advance by the user and stored in the ROM 171; but the disclosure is not limited to this embodiment. For example, the operation mode specification table provided by the public wireless LAN service provider or the mobile communication network provider may be downloaded and set in the ROM 171. This configuration is readily implemented on the premise that the same operation mode specification table is set for all the users.

In the configuration that the service providing point table RT1 and the operation mode specification table RT2 are downloaded from the public wireless LAN service provider or the mobile communication network provider, the portable network connection device may access the database provided by the public wireless LAN service provider or the mobile communication network provider at regular intervals to download the service providing point table RT1 and the operation mode specification table RT2. This continually updates the service providing point table RT1 and the operation mode specification table RT2 and thereby allows identification of the current position of the portable network connection device and determination of the optimum wireless access point for connecting with the upper-layer network with higher accuracy.

### E3. Modification 3

The procedure of the first embodiment detects any wireless access point with the portable network connection device 100 present in its neighbor area, based on the identified current position of the portable network connection device 100, and determines the wireless access point with the highest priority among the detected wireless access points, as the wireless access point for connecting with the upper-layer network; the disclosure is, however, not limited to this embodiment. According to another embodiment, the procedure may detect any wireless access point with the portable network connection device 100 present in its neighbor area and determine the wireless access point closest to the current position of the portable network connection device 100 among the detected wireless access points, as the wireless access point for connecting with the upper-layer network. This alternative embodiment has the similar advantageous effects to those of the first embodiment.

According to the first embodiment, the wireless access points with the setting of "-1" as the priority (wireless points in the entries of No. 3 and No. 5 in Fig. 9) are the wireless access points used by the public wireless LAN connection services, which the user does not subscribe. Such wireless access points are preferably omitted from the settings of the operation mode specification table RT2 in the configuration that employs the method of determining the wireless access point closest to the current position of the portable network connection device 100 as the wireless access point for connecting with the upper-layer network. Such omission prevents any of the wireless access points used by the public wireless LAN connection services, which the user does not subscribe, from being determined as the wireless access point for connecting with the upper-layer network.

### E4. Modification 4

The fourth embodiment uses the position-identified time point (i.e., the time point when the current position is identified) as the information stored in correlation to the location information (latitude and longitude) on the current position of the portable network connection device 100c in the ROM 171; but the disclosure is not limited to this embodiment. For example, the order of identifying the current positions may be stored in correlation to the current positions in the ROM 171. In the configuration that uses GPS to identify the current position as described in the second embodiment, the current position may be identified at regular intervals. In this case, since the current position is identified at regular intervals, the time period required for moving between the two points where the current position (latitude and longitude) of the portable network connection device is identified (i.e., the time period between the previous identification of the current position and the present identification of the current position) can be specified without recording the position-identified time point. This configuration accordingly enables computation of the average moving rate and estimation of the future position of the portable network connection device on the move line without recording the position-identified time point.

### E5. Modification 5

The procedure of the fourth embodiment estimates the future position of the portable network connection device 100c, based on the current position of the portable network connection device 100c and the record of the current positions stored in correlation to the position-identified time points in the ROM 171 (i.e., the past positions of the portable network connection device 100c). According to another embodiment, the future position of the portable network connection device 100c may be estimated, based on only its past positions. The procedure of this alternative embodiment may specify the move line, based on the location information on the respective past positions or points P(T-6) to P(T-1) of Fig. 19 stored in correlation to the respective position-identified time points, and estimate the future position of the portable network connection device on the specified move line.

### E6. Modification 6

The two tables, i.e., the service providing point table RT1 and the operation mode specification table RT2 are referred to in the process of setting the operation mode according to the first to the third embodiments, but the tables referred to for this purpose are not limited to these two tables. Another embodiment may provide only one integrated table including the settings of both the service providing point table RT1 in the portable network connection device 100, 100a or 100b and the operation mode specification table RT2 and refer to this integrated table to set the operation mode. Another embodiment may exclude the priority (representing the probability for selecting as the wireless access point for connecting with the upper-layer network) from the operation mode specification table RT2, provide a table correlating the wireless access point ID to the priority (hereinafter called "priority table"), and refer to three tables, i.e., the service providing point table RT1, the modified operation mode specification table RT2 and the priority table to set the operation mode.

### E7. Modification 7

Although the MAC address is used as the wireless access point ID assigned to the wireless LAN access point in the service providing point table RT1 and the operation mode specification table RT2 according to the first, the second and the fourth embodiments, the ESSID may be used instead of the MAC address.

### E8. Modification 8

The procedure of the third embodiment sets the operation mode correlated to the representative point nearest to the current position of the portable network connection device 100b, as the operation mode of the transfer processor 121; the disclosure is, however, not limited to this embodiment. For example, the operation mode correlated to the representative point second nearest to the current position of the portable network connection device 100b may be set as the operation mode of the transfer processor 121. Another embodiment may give preference to the representative points with respect to the wireless LAN access points over the representative points with respect to the mobile communication network access points, identify the representative point among the representative points located within a predetermined distance from the portable network connection device 100b based on the given preference, and set the operation mode correlated to the identified representative point as the operation mode of the transfer processor 121. In general, the portable network connection device according to the disclosure may adopt any arbitrary configuration that specifies one representative point meeting a preset condition relating to the distance between the portable network connection device 100b and each representative point.

### E9. Modification 9

The structures of the portable network connection devices 100, 100a, 100b and 100c described in the respective embodiments are only illustrative and may be changed, altered and modified in various ways. For example, in each of the embodiment, the wireless LAN control circuit 174 and the wireless WAN control circuit 175 may be constructed as wireless communication interfaces configured to make wireless communication by the wireless LAN conforming to the IEEE 802.11a/b/g/n standard, as well as any future available wireless LAN. The wireless LAN control circuit 174 and the wireless WAN control circuit 175 may be configured in conformity to not the entirety of but only part of the IEEE 802.11 a/b/g/n standard. The mobile communication control circuit 176 may be constructed as a wireless communication interface configured to make wireless communication by mobile communication conforming to the 3G/HSPA protocol, as well as any future available mobile communication, such as LTE, newt-generation mobile WiMAX (IEEE802.16m) or next-generation PHS (XGP: eXtended Global Platform).

According to the above embodiments, the portable network connection device 100, 100a, 100b or 100c includes the three different types of wireless communication interfaces, i.e., wireless LAN control circuit 174, wireless WAN control circuit 175 and mobile communication control circuit 176. The portable network connection device 100, 100a, 100b or 100c may, however, include only one or two of these three different types of wireless communication interfaces or may include four or more different types of wireless communication interfaces according to other embodiments. In another example, the portable network connection device 100, 100a, 100b or 100c may include a plurality of the same type of wireless communication interfaces. The disclosure is not limited to the wireless LAN or mobile communication but is generally applicable to wireless communication in any suitable wireless communication network.

Although the battery (secondary battery) is used for the power source of the portable network connection device 100 according to the above embodiments, a primary battery, such as dry-cell battery, a solar battery, or a power generation battery, such as fuel cell may be used instead. According to other embodiments, the portable network connection device 100 may have power supply by wireless power feeding, may use an AC-DC converter as the power source or may have a built-in power device using commercial AC power. The network connection device of the disclosure is not limited to the portable or transportable form, but the disclosure is applicable to any network connection device that can be movable as needed basis.

According to another embodiment, part of the hardware configuration may be replaced by the software configuration, and, in an opposite manner, part of the software configuration may be replaced by the hardware configuration. When part or all of the functions according to the disclosure is implemented by the software configuration, the software (computer programs) may be provided in the form of storage in a computer readable storage medium. The "computer readable storage medium" herein is not limited to portable storage media, such as flexible disks and CD-ROMs but includes internal storage devices, such as various RAMs and ROMs, incorporated in the computer and external storage devices, such as hard drive, attached to the computer. The term "computer readable storage medium" is accordingly used in the wider sense to represent any non-transitory storage medium.

The invention may be implemented by various other embodiments.

According to another embodiment, there is provided the network connection device, which further comprises a priority table that associates a priority for selecting as the effective access point to each of the plurality of access points, wherein the operation mode controller extracts any access point meeting a preset condition that the distance between the network connection device and the access point is not greater than a predetermined distance, among the plurality of access points, based on the acquired position-related information and the location information of each of the plurality of access points recorded in the wireless access point location table, and refers to the priority table to determine an access point with highest priority among the extracted access points, as the effective access point used for wireless communication.

According to this embodiment, when one of the extracted access points located within the predetermined distance from the network connection device is selected as the effective access point used for wireless communication, the operation mode of the wireless communication controller is set to the adequate operation mode for the selected access point. Additionally, this embodiment sets the higher priority to the access point having the higher demand to be used for wireless communication, while setting the lower priority to the access point having the lower demand to be used for wireless communication, thereby enabling the operation mode of the wireless communication controller to be set to the adequate operation mode for the access point having the higher demand to be used for wireless communication.

According to another embodiment, there is provided the network connection device, which further comprises an operation mode specification table that associates location information representing position of each of the plurality of representative points with either the first operation mode or the second operation mode, wherein the locator identifies the current position of the network connection device as the position-related information, and wherein the operation mode controller identifies one representative point meeting a preset condition relating to a distance between the network connection device and a representative point, among the plurality of representative points, based on the position-related information and the location information of each of the representative points stored in the operation mode specification table, and sets the operation mode of the network connection device to an operation mode associated with the identified representative point in the operation mode specification table.

According to this embodiment, the points in the areas having the high probability where the network connection device is located are set as the representative points, so that the operation mode of the wireless communication controller is set to the adequate operation mode at the point where the network connection device is located. Additionally, this embodiment simplifies the processing of setting the operation mode after identifying the current position of the network connection device, so as to enable the operation mode of the moved network connection device to be promptly set to or changed to the adequate operation mode as needed basis.

According to another embodiment, there is provided the network connection device, wherein the locator iteratively identifies the current position of the network connection device, stores the iteratively identified current position in association with time period-related information regarding a time interval between two consecutive identifications of the current position, in the storage module, and estimates and identifies a future position, based on most lately identified current position and time period-related information correlated thereto and previously identified and stored current positions and time period-related information correlated thereto, and wherein the operation mode controller sets the operation mode of the network connection device based on the identified future position.

According to this embodiment, the operation mode of the wireless communication controller can be set or changed in advance to the adequate operation mode for the future position where the network connection device is expected to be located after a preset period of time. This embodiment advantageously shortens the overhead time or the time period required before the actual start of wireless communication in the adequate operation mode, compared with the procedure of setting or changing the operation mode of the wireless communication controller to the adequate operation mode after reaching the future position.

The preset period of time may be, for example, a time period required for pre-processing including authentication performed prior to wireless communication.

According to this embodiment, the operation mode of the wireless communication controller can be set or changed in advance to the adequate operation mode for the predicted position where the network connection device is expected to be located on completion of the pre-processing including authentication. This embodiment enables the adequate operation mode to be set prior to the start of actual data transmission by wireless communication after pre-processing, thus enabling data transmission by wireless communication to immediately start without the overhead period.

According to another embodiment, there is provided the network connection device, which further comprises a wireless access point location table that records an identifier assigned to each of the plurality of access points, in association with location information and signal output strength during wireless communication with each of the plurality of access points; and a received signal strength detector that detects received signal strength of a received signal including the identifier, which is output from each of the access points, wherein the plurality of access points are respectively located at preset different positions, and the location information on the plurality of access points represent the preset different positions, wherein the locator computes a difference between the signal output strength set in the wireless access point location table and the received signal strength of the received signal including the identifier, with respect to at least three access points among the plurality of access points, and identifies a current position of the network connection device as the position-related information, based on the computed differences with respect to the at least three access points and location information of the at least three access points.

This embodiment identifies the current position of the network connection device, based on the difference between the signal output strength and the received signal strength with respect to at least three access points and the location information of the at least three access points, thus ensuring accurate identification of the current position.

## Claims

1. A network connection device (100; 100a; 100b; 100c), comprising:
a locator (124; 124a, 124b; 126) arranged to identify a position of the network connection device and to acquire position-related information related to the identified position;
an operation mode controller (122) arranged to set one operation mode among a plurality of operation modes respectively having different network connecting functions as an operation mode of the network connection device based on the acquired position-related information; and
a wireless communication controller (121) arranged to execute wireless data communication in the set operation mode.

2. The network connection device according to claim 1, wherein
the plurality of operation modes include a first operation mode, in which the network connection device (100; 100a; 100b; 100c) is configured to serve as a bridge, and a second operation mode, in which the network connection device is configured to serve as a router.

3. The network connection device according to claim 1 or 2, wherein
the locator (124; 124a, 124b; 126) is arranged to acquire either a current position of the network connection device (100; 100a; 100b; 100c) or a future position predicted with high probability where the network connection device is located in a preset period of time, as the position-related information.

4. The network connection device according to claim 2 or 3, wherein
the operation mode controller (122) comprises:
a memory (171) arranged to store either the first operation mode or the second operation mode in association with each of a plurality of access points; and
an access point determiner (125) arranged to determine an access point used for data communication based on the position-related information, wherein
the operation mode controller is arranged to set the operation mode of the network connection device to an operation mode associated with the determined access point.

5. The network connection device according to claim 4, wherein
the plurality of access points are respectively located at preset different positions (A, B, C, D),
the memory includes:
a wireless access point location table (RT1) including location information representing one of the preset different positions with respect to each of the plurality of access points (500, 600, 610, 700); and
an operation mode specification table (RT2) that associates either the first operation mode or the second operation mode with each of the plurality of access points, wherein
the operation mode controller (122) is arranged to select an access point meeting a preset condition relating to a distance between the network connection device (100; 100a; 100b; 100c) and an access point (500, 600, 610, 700), among the plurality of access points, based on the position-related information and the location information of each of the plurality of access points recorded in the wireless access point location table, and is arranged to determine one of the selected access points as an effective access point used for wireless communication by the network connection device, and
the operation mode controller (122) is arranged to set the operation mode of the network connection device to an operation mode associated with the effective access point in the operation mode specification table (RT2).

6. The network connection device according to claim 5, wherein
the memory (171) further includes a priority table that associates a priority to each of the plurality of access points, wherein
the preset condition for selecting the access point by the operation mode controller (122) is that the distance between the network connection device (100; 100a; 100b; 100c) and the access point (500, 600, 610, 700) is not greater than a predetermined distance, and
the operation mode controller is arranged to refer to the priority table and to determine an access point with the highest priority among the selected access points, as the effective access point used for wireless communication.

7. The network connection device according to claim 2 or 3, wherein
the operation mode controller (122) includes:
a memory (171) including either the first operation mode or the second operation mode in association with each of a plurality of preset representative points; and
a representative point identifier that identifies a representative point, which the network connection device belongs to, based on the position-related information, wherein
the operation mode controller (122) is arranged to set the operation mode of the network connection device to an operation mode associated with the identified representative point.

8. The network connection device according to claim 7, wherein
the memory (171) includes:
an operation mode specification table (RT5) arranged to associate location information representing position of each of the plurality of representative points with either the first operation mode or the second operation mode, and
the operation mode controller (122) is arranged to identify one representative point meeting a preset condition relating to a distance between the network connection device and a representative point as an effective representative point, among the plurality of representative points, based on the position-related information and the location information of each of the representative points stored in the operation mode specification table, wherein
the operation mode controller (122) is arranged to set the operation mode of the network connection device to an operation mode associated with the effective representative point in the operation mode specification table (RT5).

9. The network connection device according to claim 1 or 2, wherein
the locator (124; 124a, 124b; 126) is arranged to iteratively identify a current position of the network connection device (100; 100a; 100b; 100c), and to estimate and identify a future position predicted with high probability where the network connection device is located in a preset period of time, as the position-related information.

10. The network connection device according to claim 9, wherein
the locator (124; 124a, 124b; 126) is arranged to store the iteratively identified current position in association with time period-related information regarding a time interval between two consecutive identifications of the current position, and
the locator is arranged to estimate and identify the future position as the position-related information based on a most recent identified current position and the time period-related information associated with the most recent identified current position and previously identified and stored current positions and the time period-related information associated with the previously identified and stored current positions.

11. The network connection device according to claim 10, wherein
the preset period of time is a time period required for pre-processing including authentication performed prior to the wireless communication.

12. The network connection device according to any preceding claim, further comprising:
a wireless access point location table (RT1) arranged to record an identifier assigned to each of a plurality of access points (500, 600, 610, 700) in association with location information and signal output strength during wireless communication with each of the plurality of access points,
wherein preferably the network connection device further comprises a received signal strength detector (123) arranged to detect a received signal strength of a received signal including the identifier, which is output from each of the access points,
wherein, preferably, the plurality of access points (500, 600, 610, 700) are respectively located at preset different positions (A, B, D, C),
and wherein more preferably, the location information associated with each of the plurality of access points (500, 600, 610, 700) represents one of the preset different positions (A, B, D, C).

13. The network connection device according to claim 12, wherein
the locator (124; 124a, 124b; 126) is arranged to compute a difference between the signal output strength in the wireless access point location table and the received signal strength of the received signal including the identifier, with respect to at least three access points among the plurality of access points, and is arranged to identify a current position of the network connection device as the acquired position-related information on the computed differences with respect to the at least three access points (500, 600, 610, 700) and location information of the at least three access points.

14. A method of setting an operation mode in a network connection device (100; 100a; 100b; 100c) for communication with each of a plurality of access points, the method comprising:
identifying a position of the network connection device;
acquiring position-related information related to the identified position; and
setting the operation of the network connection device to either a first operation mode, in which the network connection device serves as a bridge, or a second operation mode, in which the network connection device serves as a router, based on the acquired position-related information.

15. A non-transitory computer readable storage medium including computer readable instructions, which when executed by a network connection device (100; 100a; 100b; 100c), cause the network connection device to perform a method of setting an operation mode for communication with each of a plurality of access points, the method comprising:
identifying a position of the network connection device;
acquiring position-related information related to the identified position; and
setting the operation of the network connection device to either a first operation mode, in which the network connection device serves as a bridge, or a second operation mode, in which the network connection device serves as a router, based on the acquired position-related information.
